# DEMANDE DE BREVET EUROPEEN

(11) **EP 0 572 718 A1**
(43) Date de publication de la demande: **08.12.1993**
(21) Numéro de dépôt: 92120512.6
(22) Date de dépôt: 01.12.1992
(51) Int. Cl.: B23H 7/02

(54) **Machine thermostable pour découper par électroérosion**

(30) Priorité: 31.05.1992 EP 92201546
(71) Demandeur: CHARMILLES TECHNOLOGIES S.A., CH-1217 Meyrin 1 (CH)
(72) Inventeur: Lehmann,Hans, CH-1234 Vessy (CH)

(57) **Abrégé**

Une machine pour découper par électroérosion avec un fil-électrode comprend en particulier un bâti (1, 2, 3, 6) sur lequel sont montés deux systèmes à mouvements croisés (7) actionnant le mouvement relatif entre les deux électrodes et l'inclinaison du fil et deux bras (9 et 16) terminés chacun par une tête d'usinage (18 et 19), et une armoire électrique (46) contenant un générateur d'impulsions électriques et une commande numérique, une cabine (61, 65) étanche aux liquides avec au moins une porte coulissante 63 disposée autour de cette machine et un bac 45 dit réservoir "sale", placé sur le sol de cette cabine, au fond du socle du bâti et destiné à recueillir le liquide diélectrique d'usinage qui s'écoule de la zone d'usinage. Deux piliers (17) servent à brider la pièce à usiner. La cabine est montée sur une palette (47) sur laquelle sont fixés tous les équipements de la machine.

## Description

La présente invention concerne une machine thermostable à aspersion ou à immersion, pour découper par électroérosion avec un fil-électrode, dans laquelle du liquide diélectrique est injecté dans la zone d'usinage depuis deux têtes d'usinage, recueilli dans un bac, puis recyclé vers ces têtes.

Les machines pour découper par électroérosion avec un fil-électrode connues sont le plus souvent constituées par une table de travail sur laquelle est fixée la pièce-électrode à usiner ainsi que son système de bridage, le tout plongé dans un bac de travail recueillant le liquide diélectrique. Le fil-électrode défile entre deux têtes d'usinage situées de part et d'autre de la pièce à usiner et passe à travers la zone d'usinage, c'est-à-dire la fente découpée dans cette pièce. Il s'avance dans celle-ci selon la trajectoire prévue grâce à un mouvement relatif entre les deux électrodes et peut aussi simultanément s'incliner par rapport à la verticale, selon un angle prédéterminé. Chaque tête d'usinage comporte un guide-fil et injecte du liquide d'usinage entre le fil et la pièce afin de les refroidir et d'éliminer les déchets. Ce mouvement relatif est réalisé en déplaçant soit la pièce, soit les têtes, et l'inclinaison du fil en les déplaçant (ou les décalant) l'une par rapport à l'autre. Ces déplacements s'effectuent en général dans deux plans horizontaux, de part et d'autre de la zone d'usinage, grâce à deux systèmes à mouvements croisés. Ces derniers, ainsi que le bac d'usinage, les bras portant les têtes d'usinage, souvent les organes d'alimentation et d'évacuation du fil, sont montés sur un bâti. La table de travail peut être fixée directement sur ce bâti ou sur l'un des systèmes à mouvements croisés reposant sur le socle de ce bâti, et faire ainsi office de fond du bac d'usinage. Un appareillage EDM est encore équipé avec un circuit d'alimentation et de recyclage du diélectrique, une ou plusieurs armoires électriques contenant un générateur d'impulsions électriques et une commande numérique, ainsi qu'un réceptacle pour le fil usé, communiquant avec des organes appropriés pour évacuer le fil vers ce réceptacle, à sa sortie de la zone d'usinage. En usinage par aspersion il faut prévoir de plus des écrans ou protections anti-éclaboussures de types divers, variant avec le constructeur, à fixer en général sur le bras supérieur.

L'usinage par électroérosion avec des décharges électriques intermittentes (EDM) dégage beaucoup de chaleur; de plus, ce type d'usinage est relativement long . C'est pourquoi les variations de température ont une grande influence en usinage EDM, les déformations thermiques pouvant affecter sa précision et sa reproductibilité. Ces déformations peuvent être dues à la chaleur dégagée par l'usinage proprement dit, par l'échauffement de certains organes (tels les pompes, moteurs actionnant les systèmes à mouvements croisés déplaçant les têtes d'usinage et/ou la pièce à usiner selon des trajectoires contrôlées, le générateur d'impulsions , la commande numérique, etc..), ainsi qu'à des modifications de la température ambiante.
L'utilisation de matériaux à faible déformation thermique telle des céramiques, ou la régulation de la température du bain de liquide diélectrique d'usinage n'ont pas réussi à éliminer ce problème.
La déformation thermique de la pièce à usiner et de son système de bridage jouent un rôle, mais il est connu que le manque de précision est surtout le résultat d'une déformation thermique différente pour chacun des dispositifs à mouvements croisés déplaçant les têtes d'usinage selon des trajectoires contrôlées, et pour leurs supports sur le bâti de la machine.

Le premier objet de la présente invention est donc de diminuer l'amplitude des variations de température en activant la dissipation de la chaleur dégagée et aussi de favoriser une répartition uniforme de la température à travers l'appareillage en réalisant l'équilibre thermique.

Elle a aussi pour but de créer une machine :
- compacte et économique,
- apportant une sécurité totale à l'opérateur, et
- augmentant largement son confort.

Il est connu qu'une structure permettant à l'air ambiant de circuler librement entre divers éléments de cet appareillage, (telle celle décrite dans US 3,469,058), favorise la dissipation de la chaleur dégagée. Certains constructeurs ont même proposé de ventiler l'intérieur du bâti ou des bras portant les têtes avec de l'air froid (US 4,698,477 ou JP 63-35367)
Contrairement à l'usinage EDM à aspersion où le niveau de liquide dans le bac de travail est relativement bas, ce bac recueillant seulement le liquide aspergé entre les électrodes, en usinage par immersion, lorsque l'énergie mise en oeuvre n'est pas trop importante, il est possible de remédier à ces fluctuations de température en contrôlant la température du liquide diélectrique. Dans le cas de l'enfonçage EDM, certains constructeurs ont même proposé d'immerger la colonne portant les supports des électrodes dans le liquide d'usinage remplissant le bac de travail, comme décrit dans FR 1,326,482, par exemple. Mais pour les puissances mises actuellement en jeu, il est devenu difficile de réfrigérer suffisamment le diélectrique. De plus, pour des raisons de sécurité, la solution ci-dessus est difficile à appliquer à l'usinage EDM à fil, où le liquide d'usinage n'est plus un liquide isolant comme l'huile, mais de l'eau.

La présente invention a permis de créer une machine pour découper avec un fil électrode dans laquelle on active la dissipation de la chaleur dégagée et on réalise l'équilibre thermique.

A cet effet, la machine selon la présente invention pour découper par électroérosion une pièce fixe avec un fil-électrode guidé par deux têtes d'usinage depuis lesquelles du liquide diélectrique est injecté dans la zone d'usinage, avec un bâti sur lequel sont montés les systèmes à mouvements croisés actionnant deux bras terminés chacun par l'une des têtes d'usinage de manière à commander le mouvement relatif entre le fil et la pièce et l'inclinaison du fil, un circuit destiné à alimenter les têtes d'usinage en liquide diélectrique et à le recycler vers ces têtes et avec une ou plusieurs armoires électriques contenant une commande numérique et un générateur d'impulsions électriques, présente les caractéristiques suivantes:
- le système de bridage de la pièce est monté sur des piliers fixés directement sur le socle du bâti, sans l'intermédiaire d'une table et d'un bac de travail,
- le socle du bâti est composé d'éléments verticaux disposés de manière à laisser un libre accès à l'espace qu'ils délimitent avec le sol et ce système de bridage,
- une cabine étanche aux liquides est disposée autour du bâti de la machine, et
- un bac dit réservoir "sale", car destiné à recueillir le liquide diélectrique d'usinage et le fil usé est placé sur le sol de cette cabine, entre ou autour des pieds du socle du bâti .

C'est donc une machine dans laquelle le liquide d'usinage est recueilli dans un réservoir placé au pied du socle du bâti.
La cabine permet évidemment de soustraire 1 zone d'usinage à l'influence des variations de température extérieures et d'amener l'air à l'intérieur à une température d'équilibre et de le climatiser ou thermostater si nécessaire; en plus, dans le cas d'une machine à aspersion, elle est une excellente protection contre les éclaboussures inhérentes à ce type d'usinage et permet surtout de supprimer le bac de travail dans la zone d'usinage et donc la table de travail et de laisser ainsi le haut du socle ouvert, la pièce à usiner et son système de bridage étant disposés au-dessus. L'air, éventuellement thermostaté, de la cabine peut circuler librement autour du bras portant la tête d'usinage supérieure et de la partie du bâti voisine de la zone d'usinage, ceci d'autant plus que le socle peut être composé d'éléments verticaux disposés de manière à laisser un libre accès au réservoir "sale". En usinage par aspersion, il peut de plus circuler autour de la pièce à usiner, de son système de bridage et du bras portant la tête d'usinage inférieure. On active ainsi la dissipation de la chaleur dégagée dans ces organes. On peut aussi les refroidir dans un "bain" d'air en soufflant par ex. de l'air froid vers la zone d'usinage. On peut aussi prévoir des organes de convexion d'air pour activer cette circulation et hâter l'établissement de l'équilibre thermique. Par un contrôle approprié de l'air ambiant de la cabine, on peut réduire sensiblement et parfois même éliminer pratiquement les modifications de la position relative de la pièce et des deux têtes d'usinage en raison d'écarts de température entre ces organes. De plus, le volume d'air ainsi contrôlé fait écran autour de la zone d'usinage, qui n'est plus influencée par la chaleur dégagée par la ou les armoires électriques.

Par ailleurs, on peut laisser le fil se diriger (ou tomber, s'il est sectionné en petits tronçons), à la sortie de la tête d'usinage inférieure, dans le socle ; le fil usé vient donc s'accumuler dans le liquide d'aspersion "sale" recueilli à la base du socle. Dans le cas où le fil n'est pas sectionné à la sortie de la zone d'usinage, la longueur de fil usé se refroidit au contact du liquide et ce refroidissement se transmet à la section défilant à travers la zone d'usinage , diminuant ainsi le risque de rupture du fil.
Enfin, en usinage avec aspersion, comme la cabine est une excellente protection contre les éclaboussures, on peut augmenter dans une large mesure la pression d'injection du liquide d'aspersion, ce qui permet d'augmenter son débit et donc d'accélérer encore le refroidissement des électrodes et des têtes d'usinage , et donc de limiter la chaleur dégagée dans l'appareillage.
Par "cabine" on entend un ensemble de hautes parois s'élevant plus haut que le bâti de la machine, entourant un chassis faisant office de sol, et recouvert ou non d'un "plafond", ce dernier étant indispensable lorsqu'il est prévu de thermostater ou climatiser l'air de cette cabine. Dans le cas d'une cabine faisant "cage de Faraday", un plafond plein peut être remplacé ou doublé d'une grille métallique appropriée.
Cette cabine peut présenter une porte frontale, par ex. coulissante, pourvue de moyens appropriés d'étanchéité aux liquides . Elle peut avoir d'autres ouvertures latérales protégées par des panneaux pouvant coulisser latéralement ou en hauteur, ou présenter des ouvertures dans le plafond afin de permettre le chargement des pièces par le haut.
Elle peut avoir des parois capables de se soulever d'un seul tenant en dégageant la zone d'usinage. Ses parois peuvent être amovibles mais former un ensemble étanche avec le sol de la cabine, de manière à permettre un usinage en immersion sans bac de travail. Certaines ouvertures latérales peuvent être prévues pour laisser une longue pièce pénétrer jusqu'à la zone d'usinage pour y être tronçonnée, par exemple.
Elle peut s'étendre autour de tout ou partie du circuit de diélectrique et même englober ou être reliée à la ou aux armoire(s) électriques contenant le générateur d'impulsions et la commande numérique. Il peut être avantageux de disposer la face de l'armoire électrique portant l'écran de la commande numérique sur le même côté de la cabine que la porte frontale. Pour augmenter le confort de l'opérateur, cet écran peut être légèrement en oblique, ou même être orientable afin de faciliter la surveillance.

Elle peut présenter toutes sortes de moyens, de types connus, pour contrôler l'air qu'elle contient, par exemple des moyens de climatisation, de ventilation, de régulation de la température, pour aspirer les fumées, les odeurs, la buée, pour insuffler de l'air froid ou pour créer une convexion d'air.
Elle peut aussi être munie de panneaux d'isolation thermique ou acoustique, de moyens d'éclairage; le chassis peut présenter des dispositifs anti-vibrations et la ou les portes ou panneaux ouvrants des vitres anti-buée.
Selon certaines variantes, le réservoir à liquide "sale" peut être une cuve dans laquelle reposent le socle ainsi que certains éléments du circuit d'alimentation en liquide diélectrique. Il est entouré par une paroi latérale, la paroi arrière et la paroi frontale avec porte de la cabine, ainsi que par la paroi interne séparant l'espace d'usinage de la ou des armoires électriques.
Des moyens de type connu aspirent le liquide "sale" , le canalisent à travers un système de filtration, lui aussi de type connu, vers un réservoir destiné au liquide propre. D'autres moyens appropriés régulent la température et la pression du liquide propre et le canalisent vers les têtes d'usinage.

Cette cuve, ainsi que tous les autres équipements de la machine, peuvent être fixés sur le même chassis ou "palette", y compris la ou les armoires électriques contenant le générateur d'impulsions et la commande numérique. Les divers éléments de la machine sont interconnectés lors du montage en fabrication, ce qui facilite énormément l'installation d'une machine selon la présente invention (temps d'installation beaucoup plus court, sans nécessiter de spécialiste), rend son transport très aisé (car il n'y a qu'une pièce à transporter et rien à déconnecter), et diminue les frais d'exploitation, la surface au sol étant beaucoup plus faible que celle des machines connues similaires. Selon une variante, cette palette repose sur des pieds agencés pour permettre le passage d'un transpalette ou gerbeur pour charger de grosses pièces.

Selon un autre mode d'exécution particulièrement avantageux, une séparation peut isoler la zone d'usinage des organes mécaniques actionnant les déplacements des têtes d'usinage, en particulier une paroi ne laissant passer que les bras terminés par les têtes d'usinage. Elle peut être reliée aux parois de la cabine et délimiter trois caissons isolés les uns des autres:
- un volume constitué par la ou les armoires électriques et pourvu de la climatisation et ventilation appropriée;
- une partie dite "propre" où les organes mécaniques actionnant les déplacements des têtes d'usinage et éventuellement de la pièce à usiner, peuvent être protégés de la buée régnant dans la zone d'usinage et leur température régulée de manière désirée; on peut prévoir des moyens pour établir une surpression dans cette enceinte afin que la buée due au liquide d'aspersion n'y pénètre pas. Le générateur d'impulsions peut être avantageusement monté dans cette partie "propre", par exemple dans la traverse séparant les systèmes à mouvements croisés, et être ainsi très proche de la zone d'usinage, ce qui raccourcit très avantageusement les cables le reliant aux électrodes.
- Enfin, un espace "sale" avec la zone d'usinage, le socle creux de la machine contenant du liquide "sale" et éventuellement le fil use.

On peut disposer les systèmes à mouvements croisés comme décrit dans la demande de brevet DOS 38 41 314 c'est-à-dire les disposer au-dessus et en-dessous d'une traverse horizontale unique reposant sur deux épaulements du socle.
Mais la présente invention n'est nullement limitée à cette structure particulière du bâti. D'autres structures de type portique ou dites "en C", avec pièce à usiner fixe ou non, peuvent être utilisées pour le bâti, pourvu que le socle ne soit pas un caisson fermé de tous les côtés et surmonté d'une table et soit composé d'éléments verticaux permettant d'accéder librement au bac "sale". Ils peuvent former un "U" plus ou moins évasé, n'être pas forcément perpendiculaires et avoir des profils variés, des épaulements, des rebords, etc.

Les systèmes à mouvements croisés peuvent être de tout type connu, offrant une grande longévité et une bonne précision dans les déplacements : à aiguilles tels des guidages avec double "V" précontraints équipés de cages à aiguilles, à entraînement mécanique, hydraulique ou pneumatique, à glissières et chariots, à coulisseaux et rails, éventuellement avec rattrapage de jeu. Il peuvent être munis sur tous les axes de systèmes anticollision. La position réelle de chaque coulisseau ou chariot est de préférence lue directement au niveau de la pièce, grâce à des règles linéaires digitales (optiques) de précision, ce qui permet de connaître avec précision la trajectoire effectivement découpée dans la pièce. On peut de plus prévoir une correction software de cette position.

Un dispositif pour sectionner le fil-électrode usé ou le friser tels que ceux bien connus dans la technique, peut être fixé sur le bras ou la tête d'usinage inférieure.

Une structure selon la présente invention présente beaucoup d'autres avantages que ceux relatifs à la thermostabilité:
- une meilleure protection contre les éclaboussures,
- une sécurité totale pour l'opérateur et
- une grande simplicité et un grand confort d'utilisation.
De plus, comme le réservoir à liquide "sale" peut également faire office de réceptacle pour fil usé, on peut supprimer ce dernier ainsi que les systèmes de courroies ou de fluide comprimé pour transporter ce fil usé vers l'arrière de la machine présents sur les machines connues. On obtient ainsi une machine plus simple et plus compacte (donc beaucoup plus économique).
Dans les variantes relatives à l'usinage en aspersion, l'absence de bac autour de la pièce donne une structure présentant moins d'encombrement : tout l'espace compris entre la surface des piliers de bridage et la tête d'usinage supérieure peut être occupé par la pièce à usiner. Il n'y a aucun obstacle latéral sur trois côtés. Ainsi, pour une taille donnée de la machine, on peut usiner des pièces beaucoup plus hautes, larges et longues (et beaucoup plus lourdes) qu'avec les machines connues de dimensions similaires. La suppression du bac de travail a d'autres avantages: disparition des problèmes dûs à une ouverture ou rétractation accidentelle du bac et à une étanchéité défectueuse; accés plus aisé et plus rapide à la zone d'usinage pour fixer ou démonter la pièce à usiner, car il n'y a plus de bac à vider, à retracter ou de porte dont il faut commander l'ouverture.

La cabine apporte aussi une sécurité pour l'appareillage en arrêtant tout écoulement ou impact en provenance de machines voisines, ainsi qu'en faisant écran à certaines agressions extérieures.
Enfin, elle est facile à nettoyer, par du personnel peu qualifié, car il n'y a pas de dispositifs anti-éclaboussures à démonter.

Dans ce qui suit, l'invention est exposée plus en détail à l'aide du dessin représentant seulement l'un des modes d'exécution à titre de simple exemple non limitatif. La machine ainsi représentée peut recevoir toutes modifications de forme et de détail sans pour cela se départir de l'esprit de l'invention.
La fig. 1 est une perspective simplifiée de la face frontale et de l'un des côtés du bâti d'une machine selon la présente invention;
la fig. 2 illustre une perspective de la face arrière et de l'un des côtés de la machine schématisée à la fig 1, dans laquelle la paroi arrière et un côté de la cabine ont été supprimés.
Les mêmes chiffres de référence sont utilisés dans ces trois figures pour désigner les mêmes organes.

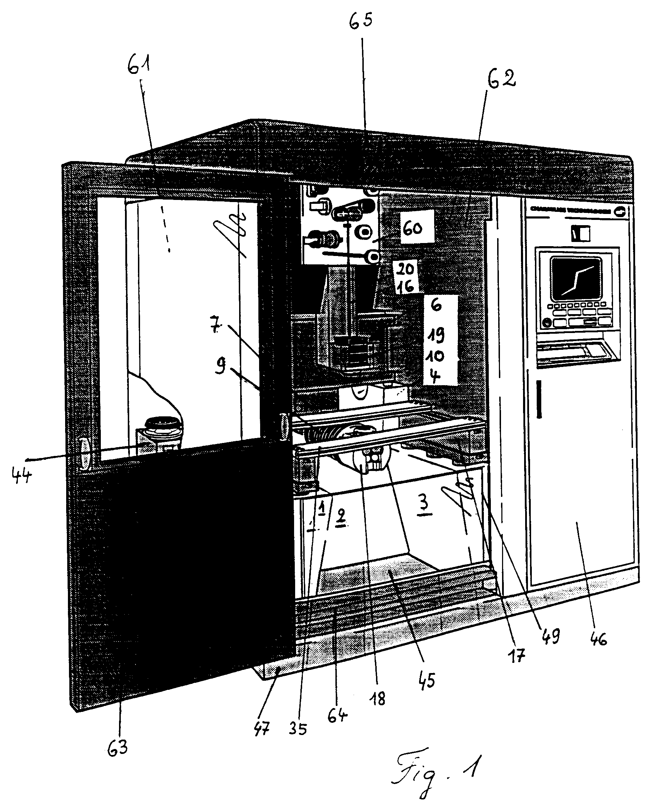

Le bâti de la machine selon la présente invention représentée au dessin a été décrit en détail dans la demande de brevet EP 92201545. Il comprend un socle constitué par trois parois perpendiculaires 1, 2 et 3. Les parois 1 et 3 présentent chacune un épaulement 4 sur lequel s'appuie la traverse 6. La paroi 2 est moins haute que les parois 1 et 3 avec épaulement, de manière à ménager un espace suffisant pour le système à mouvements croisés actionnant le bras inférieur 9 protégé par un soufflet. Ce socle est réalisé en Rhenocast (R) (une marque de la société George Fischer désignant un béton polymère). Ce matériau inaltérable, insensible à la rouille, isolant thermique et électrique, est approprié à cet usage, car le socle est destiné à être au contact du diélectrique usé et du fil-électrode sortant, encore sous charge électrique, de la tête d'usinage inférieure 18. Sa densité n'est que le tiers de celle de l'acier pour un coefficient de dilatation thermique comparable: 12um/degré/mn. Ce socle pourrait toutefois être réalisé en tout autre matériau connu pour cet usage: fonte, acier soudé, béton hydraulique, céramique, etc...
Les évidements 10 ménagés dans les épaulements 4 permettent de loger une vis de déplacement (non visible à la fig. 1) faisant coulisser le coulisseau 7 destiné à déplacer le bras 9 avec la tête d'usinage 18 selon l'axe X1. Ce bras 9 prolonge un deuxième coulisseau 14 (non visible à la fig. 1) destiné à le déplacer selon l'axe Y1. Deux autres coulisseaux sont montés au-dessus de la traverse 6, symétriquement aux coulisseaux 7 et 14, et sont destinés à déplacer le bras portant la tête d'usinage 19 selon les axes X2 et Y2. Les rails de guidage sur lesquel roulent ces quatre coulisseaux sont du type à double "V" précontraints, équipés de cages à aiguilles.
Le bras supérieur (non visible à la fig. 1) porte un élément vertical 16 contenant un dispositif 20 de type connu et dont seul l'habillage est visible à la fig. 1, faisant coulisser la tête d'usinage supérieure 19 le long d'une crémaillère disposée selon l'axe Z.
Cet élément vertical 16 supporte également les divers organes d'alimentation en fil-électrode (plaque 60).

La traverse 6 et les coulisseaux sont en fonte. Ils pourraient toutefois être réalisés en tout autre matériau connu pour cet usage: acier soudé, fonte, céramique, etc...
Deux piliers 17 en granit sont fixés grâce à six organes 34 sur la face supérieure des parois 1 et 3 situées en contrebas des épaulements 4. Ils présentent un rail apte à recevoir les éléments d'un système de bridage de type connu, ici les rails à rainure 35 d'un SYSTEM CT 1000.
Une paroi protectrice, transparente et mobile 49 referme latéralement l'espace ménagé entre le fond de la cuve 45 et la tête d'usinage 18, dans lequel s'accumule le fil usé.
Le liquide d'aspersion s'écoule dans la cuve 45. Le socle de la machine et les éléments nécessaires à l'alimentation et au recyclage du liquide diélectrique, telle la batterie de filtres 44, sont posés dans cette cuve 45. Celle-ci et l'armoire électrique 46 contenant le générateur d'impulsions et la commande numérique sont fixés sur la palette commune 47.

La cuve 45 est entourée par la paroi latérale 61 et la paroi arrière (non visible au dessin) de la cabine, la paroi interne 62 séparant l'espace d'usinage de l'armoire électrique 46 et la porte coulissante 63, toutes surmontées du plafond 65 qui recouvre aussi l'armoire 46. Une coulisse 64 permettant le glissement de cette porte est fixée au rebord de cette cuve 45 .
Dans cet exemple, les deux systèmes à mouvements croisés 7,8 et 14,15 sont identiques. Ils ont une grande rigidité et permettent une découpe précise et reproductible.
Leur course en X et Y sont respectivement de 400mm et 250mm. On peut usiner une pièce de plus de 500kg, ayant jusqu'à 400mm de haut, 850mm de long et 500mm de large!
Signalons enfin que la machine de cet exemple permet d'usiner une pièce de 60mm de hauteur, à la vitesse de 250mm²/mm, avec un fil stratifié de 0.3mm de diamètre .

Cette machine est réellement très compacte (3 m²). Les dimensions au sol sont de 1,8m x 1,6 et sa hauteur de 2,23m.

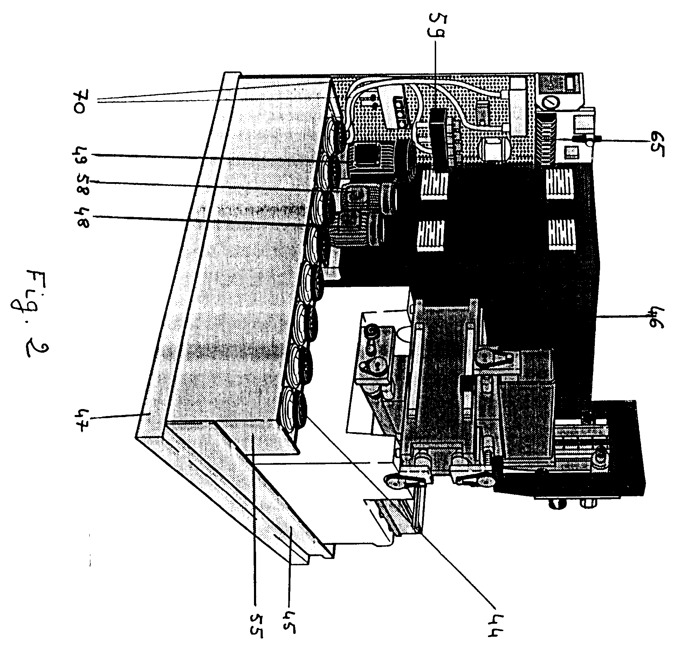

La fig. 2 est une vue de l'arrière de la machine schématisée à la fig. 1 dans laquelle les parois de la cabine, sauf celle prolongeant le côté externe le l'armoire électrique 46, ont été supprimées afin de montrer la disposition des éléments du circuit d'alimentation et de recyclage du liquide diélectrique d'usinage. Ce circuit ne comporte que deux réservoirs, la cuve 45 qui fait office de réservoir "sale" en recueillant le liquide d'aspersion qui s'écoule de la zone d'usinage et un réservoir 55 pour le liquide propre surmonté par une batterie de huit filtres 44.
Une pompe 48 aspire le liquide "sale" dans un tuyau (non visible au dessin) et l'amène , à travers la batterie de filtres 44, jusqu'au réservoir 55 destiné au liquide propre.
Grâce aux canalisations 70, une pompe 49 recycle le liquide "propre" vers les têtes d'usinage.
La pompe auxiliaire 58 est destinée aux injections à faible pression, à l'aspiration pour l'enfilage automatique du fil, ainsi qu'au mouillage des contacts.
Des capteurs de pression (non visibles au dessin), sont prévus afin de donner une information sur la pression réelle d'arrosage, ainsi que des vannes 59 et électrovannes 65 permettant de contrôler et faire varier à volonté cette pression.

Il va de soi que des modifications peuvent être apportées aux modes de réalisation qui viennent d'être décrits notamment par substitution de moyens techniques équivalents, sans sortir pour cela du cadre de la présente invention.

## Revendications

1. Machine pour découper par électroérosion une pièce fixe avec un fil-électrode guidé par deux têtes d'usinage depuis lesquelles du liquide diélectrique est injecté dans la zone d'usinage, avec un bâti sur lequel sont montés les systèmes à mouvements croisés actionnant deux bras terminés chacun par l'une des têtes d'usinage de manière à commander le mouvement relatif entre le fil et la pièce et l'inclinaison du fil, un circuit destiné à alimenter les têtes d'usinage en liquide diélectrique et à le recycler vers elles et avec une ou plusieurs armoires électriques contenant une commande numérique et un générateur d'impulsions électriques,
dans laquelle
- le système de bridage de la pièce est monté sur des piliers fixés directement sur le socle du bâti, sans l'intermédiaire d'une table de travail,
- le socle du bâti est composé d'éléments verticaux disposés de manière à laisser un libre accès à l'espace qu'ils délimitent avec le sol et ce système de bridage,
- une cabine étanche aux liquides est disposée autour du bâti de la machine, et
- un bac dit "réservoir sale", car destiné à recueillir le liquide d'usinage et le fil usés est placé sur le sol de cette cabine, entre les éléments du socle du bâti ou autour d'eux.

2. Machine selon la revendication 1, dans laquelle cette cabine comporte un plafond.

3. Machine selon la revendication 1, dans laquelle cette cabine fait office de cage de Faraday.

4. Machine selon la revendication 1, dans laquelle cette cabine présente des moyens de ventilation, et/ou de climatisation, et/ou de convexion et/ou de thermostatation de l'air qu'elle contient.

5. Machine selon la revendication 1, dans laquelle cette cabine présente des moyens pour pressuriser et/ou aspirer l'air qu'elle contient.

6. Machine selon la revendication 1, dans laquelle le réservoir "sale" est fixée sur une palette sur laquelle sont également fixés les autres équipements de la machine, y compris le générateur d'impulsions et la commande numérique contenus dans une ou plusieures armoires électriques et les moyens pour l'alimentation et le recyclage du liquide diélectrique d'usinage.

7. Machine selon la revendication 1, comprenant aussi une paroi agencée pour ne laisser passer que les bras terminés par les têtes d'usinage et isoler la zone d'usinage de la partie de la cabine contenant les systèmes à mouvements croisés et les organes mécaniques les actionnant.

8. Machine selon la revendication 7 , dans laquelle la partie de la cabine contenant les systèmes à mouvements croisés comporte des moyens pour établir une différence de pression avec la zone d'usinage.

9. Machine selon la revendication 7 , dans laquelle la partie de la cabine contenant les systèmes à mouvements croisés contient aussi le générateur d'impulsions électriques relié aux électrodes.
